(19) Europäisches Patentamt
European Patent Office
Office européen des brevets

(11) Veröffentlichungsnummer: **0 360 103 A2**

(12) # EUROPÄISCHE PATENTANMELDUNG

(21) Anmeldenummer: **89116701.7**

(22) Anmeldetag: **09.09.89**

(51) Int. Cl.5: **C08L 67/00 , C08L 77/12 , //(C08L67/00,69:00,67:02), (C08L77/12,69:00,67:02)**

(30) Priorität: **20.09.88 DE 3831873**

(43) Veröffentlichungstag der Anmeldung: **28.03.90 Patentblatt 90/13**

(84) Benannte Vertragsstaaten: **BE DE FR GB NL SE**

(71) Anmelder: **BASF Aktiengesellschaft**
**Carl-Bosch-Strasse 38**
**D-6700 Ludwigshafen(DE)**

(72) Erfinder: **Rosenau, Bernhard, Dr.**
**Karolinenterrasse 12**
**D-6730 Neustadt(DE)**
Erfinder: **Hisgen, Bernd, Dr.**
**Goethestrasse 6**
**D-6703 Limburgerhof(DE)**
Erfinder: **Heinz, Gerhard, Dr.**
**Im Vogelsang 2**
**D-6719 Weisenheim(DE)**
Erfinder: **Braun, Hans-Georg, Dr.**
**Weinbergerstrasse 6**
**D-6718 Grünstadt(DE)**
Erfinder: **Lausberg, Dietrich, Dr.**
**Nachtigalstrasse 32a**
**D-6700 Ludwigshafen(DE)**
Erfinder: **Zeiner, Hartmut, Dr.**
**Paracelsusstrasse 18**
**D-6700 Ludwigshafen(DE)**

(54) **Blends von thermotropen Polymeren mit Polyestern und Polycarbonat.**

(57) Polymere Formmasse, enthaltend
a) 20 - 70 Gew.% eines thermotropen, flüssigkristallinen Polymeren
b) 10 - 50 Gew.% eines Polycarbonats
c) 10 - 50 Gew.% eines Polyesters,
wobei die Gewichtsanteile a), b) und c) sich zu 100 ergänzen,
sowie
d) bis zu 60 Gew.-%, bezogen auf die Summe der Anteile a), b) und c), weiterer Polymerer, Füll-, Verstärkungs-, Verarbeitungs- oder sonstiger Hilfsmittel, und deren Verwendung zur Herstellung von Formkörpern, Fasern, Folien oder Beschichtungen.

EP 0 360 103 A2

# Blends von thermotropen Polymeren mit Polyestern und Polycarbonat

Thermotrope Polymere sind insbesondere teil- oder vollaromatische flüssigkristalline Polyester und Polyesteramide (LCP), die aus der anisotropen Schmelze verarbeitbar sind. Sie sind bekannt unter anderem durch folgende Druckschriften

US-PS 3804805
US-PS 3991014
US-PS 4156070
US-PS 4161470
US-PS 4181792
US-PS 4351918
US-PS 4370466
US-PS 4377681
US-PS 4390681
US-PS 4614790
EP-A 226839
EP-S 139303
EP-A 230545

Sie sind äußerlich erkennbar durch eine optisch anisotrope Schmelze, was sich u.a. durch Untersuchung zwischen gekreuzten Polarisatoren und durch das optische Verhalten bei Scherung ("Scheropaleszenz") zeigt. Außerdem ist ihre Viskosität stark scherungsabhängig und ihre Schmelzviskosität ist um Größenordnungen niedriger als die konventioneller, isotroper Thermoplaste. Bei der Verarbeitung können die Molekülängsachsen der thermotropen Polymeren orientiert werden, so daß Formkörper aus diesen Materialien einen anisotropen Aufbau aufweisen. Dies führt zu hervorragender Steifigkeit und Zähigkeit sowie hohen Elastizitätsmodul besonders in Verarbeitungsrichtung. Ein weiterer Vorzug der thermotropen Polymeren sind ihre im Gegensatz zu anderen Polymeren erheblich niedrigeren, im Verarbeitungsschritt einstellbaren thermischen Längenausdehnungskoeffizienten; diese sind besonders vorteilhaft für Anwendung in Kombination mit Metallen oder Glas, z.B. in der Glasfaseroptik zur Beschichtung optischer Fasern und zur Herstellung von Präzisionssteckverbindungen für solche Fasern.

Bedingt durch den stark anisotropen Aufbau sind Formteile aus LCP allerdings empfindlich gegen Biegebeanspruchung; ihr Bruchverhalten erinnert an das von Holz.

Diese Biegeempfindlichkeit ist eines der Haupthindernisse für die Anwendung von LCP zur Beschichtung optischer Glasfasern, wofür sie insbesondere aufgrund ihrer guten Festigkeitseigenschaften und der wie erwähnt niedrigen linearen thermischen Ausdehnungskoeffizienten gut geeignet wären.

Die Belastbarkeit durch Biegung kann u.a. durch einen Biegeversuch nach DIN 53452 beurteilt werden. Unterzieht man Formkörper aus LCP dieser Biegeprüfung, findet man, daß 100 % der Prüfkörper vor Erreichen einer Randfaserdehnung von 3,5 % brechen. Auch bei konventionellen thermoplastischen Polyestern versagt normalerweise wenigstens ein Teil der Prüfkörper unter Bruch.

Führt man diese Prüfung an Formkörpern aus Polyalkylenterephthalaten aus, versagt im allgemeinen wenigstens ein Teil der Prüfkörper unter Bruch vor Erreichen der 3,5 % Randfaserdehnung.

Prüfkörper aus Polycarbonat (PC) brechen zwar nicht, im Kraft-Dehnungsverhalten ist aber ein Nachgeben nachzuweisen, d.h. die Verformung besitzt eine plastische (Kriech-) Komponente.

Blends von PC mit geringen Anteilen (<20 %) LCP in erster Linie zur Viskositätsverbesserung sind beschrieben in EP-A-30 417, solche mit höheren LCP-Anteilen in EP-A-44 175. Allerdings weisen binäre Blends von Polycarbonat mit bis zu 30% LCP zwar wie Polycarbonat selbst die erforderliche Bruchfestigkeit, aber weder eine befriedigende Schmelzviskosität noch einen thermischen Ausdehnungskoeffizienten in dem gewünschten Bereich auf. Erhöhung des LCP-Anteils führt wieder zum Versagen bei der Biegeprüfung.

Blends von Polyalkylenterephthalaten mit LCP sind beschrieben u.a. in GB-A-20 78 240, US-PS 4 408 022, EP-A-30 417, EP-A-88 286 und EP-A-80 273. Allerdings weisen binäre Blends aus PETP und LCP ebensowenig wie PETP selbst die erwünschte Bruchfestigkeit auf.

Auch Blends von Polyalkylenterephthalaten mit PC sind bekannt; sie besitzen ein gutes mechanisches Eigenschaftsniveau und thermische Ausdehnugskoeffizienten in der für isotrope Thermoplastwerkstoffe typischen Größenordnung.

Es wurde nun gefunden, daß bestimmte ternäre Mischungen (Blends) der erwähnten Thermoplaste, die 20 - 70 % LCP, 10 - 50 % PC sowie 10 - 50 % Polyester, vorzugsweise Polyalkylenterephthalat enthalten, beträchtlichen Biegebeanspruchungen standhalten können ohne zu brechen, wobei aber überraschenderweise die erwähnten Vorzüge der LCP-Werkstoffe erhalten bleiben, nämlich eine ausgezeichnete Fließfähigkeit der Schmelze und geringe, einstellbare thermische Ausdehnungskoeffizienten. Sie sind somit ausgezeichnet verarbeitbar und für die erwähnten Anwendungen in Verbindung mit Glas oder Metall gut geeignet.

Diese Tatsache überrascht insbesondere deswegen, weil die erwünschte Kombination vorteilhafter Eigenschaften, nämlich Bruchfestigkeit, niedriger thermischer Ausdehnungskoeffizient und geringe Schmelzviskosität weder durch ein einzelnes, noch durch Mischungen von je zwei der drei Materialien erreicht werden kann.

Unmittelbarer Erfindungsgegenstand ist eine polymere Formmasse, enthaltend

a) 20 bis 70 Gew.-% eines thermotropen, flüssigkristallinen Polymeren

b) 10 bis 50 Gew.-% eines Polycarbonats

c) 10 bis 50 Gew.-% eines Polyesters;

wobei die Gewichtsanteile a), b) und c) sich zu 100 Gew.% ergänzen

sowie

d) bis zu 60 Gew.-%, bezogen auf die Summe der Anteile a), b) und c), weiterer Polymerer, Füll-, Verstärkungs-, Verarbeitungs- oder sonstiger Hilfsmittel.

Bevorzugt enthält die Formmasse 30 bis 60 Gew.-% eines flüssigkristallinen Polymeren, 30 bis 50 Gew.-% eines Polycarbonats und 10 bis 20 Gew.-% eines Polyesters.

Eine andere, ebenfalls bevorzugte Formmasse enthält 30 bis 60 Gew.-% eines flüssigkristallinen Polymeren, 10 bis 20 Gew.-% eines Polycarbonats und 30 bis 50 Gew.-% eines Polyesters.

Typische thermoplastische Formmassen der erfindungsgemäßen Art weisen einen linearen thermischen Ausdehnungskoeffizienten von unter 30 ppm/K in mindestens einer Richtung auf.

Als Polyester für die erfindungsgemäßen Blends eignen sich insbesondere die aus Alkylenglykolen mit 2 - 20 Kohlenstoffatomen und aromatischen Dicarbonsäuren oder deren Estern durch Polykondensation erhältlichen Thermoplaste. Auch Mischungen verschiedener Alkylenglykole und/oder verschiedener Dicarbonsäuren können angewendet werden. Bevorzugte Alkylenglykole sind Ethandiol und Butandiol-1,4, bevorzugte Dicarbonsäuren sind Terephthalsäure, Isophthalsäure, 1,4-, 1,5-, 2,6- oder 2,7-Naphthalindicarbonsäure. Besonders vorteilhafte Polyester sind Polyethylenterephthalat und Polybutylenterephthalat.

Die relative Viskosität der geeigneten Polyester liegt im allgemeinen im Bereich von 1, 2 bis 1, 8 dl/g (gemessen in einer 0, 5 gew.%igen Lösung in einem Phenol%-o-Dichlorbenzolgemisch (Gew.-Verh. 1 : 1) bei 25° C).

Als Polycarbonate für die erfindungsgemäßen Blends eignen sich die aus aromatischen Bisphenolen der Formel

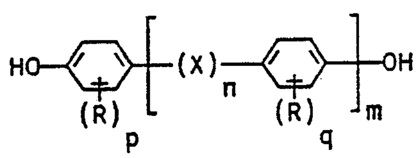

mit X = Alkylen oder Aralkylen mit 1 - 20 C-Atomen,
$-SO_2-$, -S-, -O-, oder -CO-;
n = 0 oder 1
m = 0, 1 oder 2
p,q = 0 - 4
R = $C_1$ - $C_6$ Alkyl, $C_1$ - $C_4$ Alkoxy, Halogen (Cl, Br), Phenyl
durch Umsetzung mit Kohlensäurederivaten (z.B. mit Phosgen nach dem Phasengrenzflächenverfahren) erhältlichen Polykondensate.

Auch Polycarbonate, die aus einer Mischung mehrerer der oben bezeichneten Bisphenole hergestellt sind oder die zusätzlich zu den Kohlensäureresten Reste anderer zweibasischer organischer Säuren enthalten (sog. Polyestercarbonate) können für die erfindungsgemäßen Blends vorteilhaft sein.

Besonders geeignet ist das aus Bisphenol A und Kohlensäurederivaten erhältliche Polycarbonat der Formel

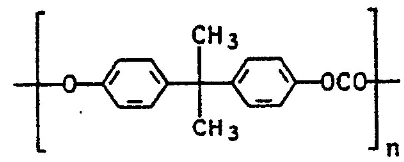

Die relative Viskosität geeigneter Polycarbonate liegt im allgemeinen im Bereich von 1,2 bis 1,5, vorzugsweise 1,28 bis 1,40 dl/g, gemessen in 0,5 gew.%iger Lösung in Dichlormethan bei 25° C.

Neben den drei Hauptkomponenten können die erfindungsgemäßen Formmassen noch bis zu 60, vorzugsweise bis zu 50 Gew.% (bezogen auf das Gesamtgewicht der Hauptkomponenten) weitere Polymere, faser- und pulverförmige Füll- und Verstärkungsstoffe sowie sonstige Hilfsstoffe enthalten.

Hilfsstoffe sind beispielsweise Stabilisatoren gegen thermischen und oxidativen Abbau oder gegen ultraviolette Strahlung; Gleit-, Entformungs- und Nukleierungsmittel, Färbemittel wie Farbstoffe und Pigmente sowie Weichmacher.

Als weitere Polymere kommen beispielsweise Elastomere oder Fluorelastomere, amorphe vollaromatische Polyester sowie aromatische Polyether wie Polyphenylenoxid (PPO), Polysulfon (PSU) oder Polyethersulfon (PES) in Betracht.

Beispiel

Herstellung eines flüssigkristallinen Polymeren (LCP); Eigenschaften

Ein 11 l Rührautoklav wurde mit 1328 g Terephthalsäure, 1437 g p-Hydroxybenzoesäure, 308 g Hydrochinon, 298 g 4,4′-Dihydroxybiphenyl, 576 g 2,7-Dihydroxynaphtalin sowie 3650 g Essigsäureanhydrid beschickt. Unter Stickstoffatmosphäre rührte man zunächst 30 Minuten bei 130° C und steigerte anschließend innerhalb von 4 Stunden die Temperatur auf 290° C. Bei dieser Temperatur wurde innerhalb einer Stunde der Druck auf 25 mbar reduziert und dann noch 10 Minuten weitergerührt. Die erhaltene hochvis kose, fadenbildende Polymerschmelze wurde durch eine Bodendüse ausgepreßt und nach Abkühlen in einem Wasserbad granuliert.

Der lineare thermische Ausdehnungskoeffizient dieses Polymeren, gemessen an spritzgegossenen Normkleinstäben 50 x 4 x 6 mm in Längsrichtung betrug 11 ppm/K. Beim Biegeversuch nach DIN 53452 brachen alle Probekörper vor Erreichen von 3,5 % Randfaserdehnung.

Versuch 2

Herstellung und Prüfung erfindungsgemäßer Mischungen

Auf einem Extruder ZSK 30/2 wurden bei 260° C Blends aus dem in Versuch 1 hergestellten LC-Polyester, einem Polyethylenterephthalat mit einer relativen Viskosität von 1,38 (0, 5 gew.%iger Lösung in Phenol/o-Dichlorbenzol 1 : 1 bei 25° C) und einem Polycarbonat auf Bisphenol A-Basis mit einer relativen Viskosität von 1,36 (0,5 gew.%ig in Dichlormethan bei 25° C) hergestellt. Die erhaltenen Blends wurden nach Abkühlung im Wasserbad granuliert und aus dem getrockneten Granulat bei 270° C Massetemperatur und 80° C Formtemperatur Prüfkörper gespritzt. Die Prüfergebnisse (23° C) sind in Tabelle 1 enthalten, wobei $\sigma_{bB}$ die Biegespannung bei Höchstkraft, $\sigma_{b3,5}$ die Biegespannung bei einer Randfaserdehnung von 3,5 % und $\alpha$ den linearen thermischen Ausdehnungskoeffizienten bezeichnen.

Tabelle 1

| Versuch Nr. | 2.1 | 2.2 | 2.3 | 2.4 |
|---|---|---|---|---|
| LCP [%] | 30 | 30 | 40 | 50 |
| PETP [%] | 40 | 50 | 30 | 40 |
| PC [%] | 30 | 20 | 30 | 10 |
| Bruch [%] | 0 | 0 | 0 | 0 |
| $\sigma$ bB [N/mm²] | 83,0 | 80,4 | | 93,4 |
| $\sigma$ b3.5 [N/mm²] | 64,8 | 64,9 | 90,5 | 87,3 |
| $\alpha$ [ppm/K] | 28 | 33 | 21 | 20 |

Vergleichsversuch 1

Unter den bei Versuch 2 genannten Bedingungen wurden Blends aus dem oben beschriebenen LC-Polyester und dem genannten Polycarbonat hergestellt. Aus diesen Blends hergestellte Probekörper ergaben bei der Prüfung die in Tabelle 2 dargestellten Ergebnisse.

Tabelle 2

| Versuch Nr. | V 1.1 | V 1.2 | V 1.3 |
|---|---|---|---|
| LCP [%] | 30 | 40 | 50 |
| PC [%] | 70 | 60 | 50 |
| Bruch [%] | 0 | 80 | 80 |
| $\sigma$ bB [N/mm²] | 0 | 86,4 | 88,4 |
| $\sigma$ b3.5 [N/mm²] | 88,4 | 99,4 | 99,7 |
| $\alpha$ [ppm/K] | 51 | 40 | 34 |

Vergleichsversuch 2

Aus dem LC-Polyester von Versuch 1 und PETP wurden unter den in Versuch 2 genannten Bedingungen Blends hergestellt und wie beschrieben zu Prüfkörpern verarbeitet, die die in Tabelle 3 zusammengefaßten Prüfergebnisse ergaben.

Tabelle 3

| Versuch Nr. | V 2.1 | V 2.2 | V 2.3 |
|---|---|---|---|
| LCP [%] | 30 | 40 | 50 |
| PC [%] | 70 | 60 | 50 |
| Bruch [%] | 100 | 100 | 100 |
| $\sigma$ bB [N/mm²] | 68,9 | 63,6 | 64,3 |
| $\sigma$ b3.5 [N/mm²] | 0 | 0 | 0 |
| $\alpha$ [ppm/K] | 48 | 43 | 35 |

Vergleichsversuch 3

Die Ergebnisse der Biegeprüfung und der Messung der thermischen Ausdehnungskoeffizienten der unveränderten Mischungspartner sind in Tabelle 4 enthalten.

Tabelle 4

| | PETP | PC |
|---|---|---|
| Bruch [%] | 40 | 0 |
| $\sigma$ bB [N/mm$^2$] | 20.8 | 0 |
| $\sigma$ b3.5 [N/mm$^2$] | 71.4 | 64.6 |
| $\alpha$ [ppm/K] | 80 | 68 |

## Ansprüche

1. Polymere Formmasse, enthaltend
a) 20 - 70 Gew.% eines thermotropen, flüssigkristallinen Polymeren
b) 10 - 50 Gew.% eines Polycarbonats
c) 10 - 50 Gew.% eines Polyesters,
wobei die Gewichtsanteile a), b) und c) sich zu 100 ergänzen,
sowie
d) bis zu 60 Gew.%, bezogen auf die Summe der Anteile a), b) und c), weiterer Polymerer, Füll-, Verstärkungs-, Verarbeitungs- oder sonstiger Hilfsmittel.

2. Formmasse nach Anspruch 1, enthaltend
a) 30 - 60 Gew.% eines flüssigkristallinen Polymeren,
b) 30 - 50 Gew.% eines Polycarbonats,
c) 10 - 20 gew.% eines Polyesters.

3. Formmasse nach Anspruch 1, enthaltend
a) 30 - 60 Gew.% eines flüssigkristallinen Polymeren,
b) 10 - 20 Gew.% eines Polycarbonats,
c) 30 - 50 gew.% eines Polyesters.

4. Thermoplastische Formmasse nach einem der Ansprüche 1 - 3 mit einem linearen thermischen Ausdehnungskoeffizienten unter 30 ppm/K in mindestens einer Richtung.

5. Verwendung der Formmasse nach einem der Ansprüche 1 - 4 zur Herstellung von Formkörpern, Fasern, Folien oder Beschichtungen.